# EUROPÄISCHE PATENTSCHRIFT

(11) **EP 2 163 222 B1**
(45) Veröffentlichungstag und Bekanntmachung des Hinweises auf die Patenterteilung: **26.12.2018**
(21) Anmeldenummer: 08016255.5
(22) Anmeldetag: 16.09.2008
(51) Int. Cl.: A61C 8/00

(54) **Abutment mit Minimalkern**
Abutment with minimal core
Butée dotée d'un noyau minimal

(43) Veröffentlichungstag der Anmeldung: 17.03.2010
(73) Patentinhaber: Straumann Holding AG, 4002 Basel (CH)
(72) Erfinder: Zucker, Arik, 8003 Zürich (CH)
(74) Vertreter: Schaad, Balass, Menzl & Partner AG

(56) Entgegenhaltungen:
- EP-A- 1 733 698
- EP-A- 1 818 318
- EP-A- 1 820 467
- WO-A-00/06042
- WO-A-2004/060197
- WO-A1-2008/006868
- DE-A1- 10 007 678
- DE-B3-102005 062 431
- US-A- 5 151 044

## Beschreibung

Die vorliegende Erfindung betrifft ein Keramik-Abutment gemäss Anspruch 1 für ein zweiteiliges Dentalimplantat.

Zweiteilige Dentalimplantate sind nach wie vor sehr verbreitet. Bei ihnen wird in einem ersten Schritt ein Verankerungsteil implantiert, auf welches das Abutment aufgebracht wird. Auf das Abutment wiederum wird ein zu applizierendes Element, wie eine Kronen-, Brücken- oder Prothesenkonstruktion aufgebracht.

In der einfachsten Form weist ein gerades, konisches Abutment zuunterst einen Gewindezapfen auf, der in die im Implantat vorhandene Innengewindebohrung eingedreht wird. Die konische Wurzelpartie des Abutments sitzt dann in der konischen Aufnahmebohrung und das Kopfteil des Abutments überragt die Implantatschulter.

Aufgrund der Kiefergegebenheiten oder wegen eines schräg gebohrten Bohrloches kann es jedoch auch notwendig sein, dass ein abgewinkeltes Abutment eingesetzt wird.

Auch bei einer noch so guten Implantation eines Implantates ist es unumgänglich, dass grössere oder kleinere Korrekturen durch Beschleifen des Abutments vorgenommen werden müssen, um sicher zu stellen, dass die darauf aufgesetzten Prothetikelemente gut passen. Das Beschleifen des Abutments kann jedoch zur Folge haben, dass dieses Abutment stellenweise zu dünn wird, was vom Zahnarzt visuell schwer feststellbar ist. Dadurch ist die Gesamtstabilität nicht mehr gewährleistet, was unter Belastung zu einem Bruch führen kann.

Dokument DE102005062431 B3 offenbart ein Keramik-Abutment gemäss dem Oberbegriff des Anspruchs 1.

Aufgabe der vorliegenden Erfindung ist es somit, ein Warnsystem bereitzustellen, das den Zahnarzt darauf hinweist, dass eine weitere Beschleifung des Abutments zu einem Bruch unter Belastung führen könnte.

Die Aufgabe wird gelöst durch ein Keramik-Abutment gemäss Anspruch 1 und durch ein Verfahren zur Herstellung eines Keramik-Abutments gemäss Anspruch 14. Weitere bevorzugte Ausführungsformen sind Gegenstand der abhängigen Ansprüche 2 bis 13.

Die vorliegende Erfindung betrifft ein Abutment zur Befestigung auf ein zweiteiliges Implantat. Das Abutment dient dazu, ein weiteres zu applizierendes Element aufzunehmen. Ein solches zu applizierendes Element ist beispielsweise ein Zwischenstück oder eine Kronen-, Brücken- oder Prothesenkonstruktion. Das Abutment weist wenigstens einen Kern und eine Deckschicht auf, wobei der wenigstens eine Kern und die Deckschicht visuell voneinander verschieden sind. Der wenigstens eine Kern ist dabei der Teil des Abutments, der minimal benötigt wird, um eine ausreichende Stabilität des Implantates zu gewährleisten. Der minimale Durchmesser hängt dabei von der Indikation, des Materials und der Verarbeitung ab. Im Gegensatz dazu stellt die Deckschicht bezüglich der Stabilität des Implantates eine optionale Schicht dar, die gegebenenfalls vollständig abgeschliffen werden darf. Idealerweise wird die Dicke der Deckschicht so gewählt, dass bei einer Standardimplantation möglichst wenig abgeschliffen werden muss, um die Patientenvisite nicht unnötig zu verlängern. Dadurch, dass der wenigstens eine Kern und die Deckschicht visuell voneinander unterscheidbar sind, setzt der Zahnarzt ein Abutment mit einem integrierten Warnsystem ein, das ihn beim Beschleifen des Abutments darauf hinweist, dass bei einem Weiterschleifen die Stabilität nicht mehr gewährleistet wäre.

Dabei gibt es verschiedene Möglichkeiten, um sicherzustellen, dass die Deckschicht visuell von dem wenigstens einen Kern zu unterscheiden ist. Unter dem Ausdruck "visuell" wird verstanden, dass der Unterschied zwischen der Deckschicht und dem wenigstens einen Kern von blossem Auge erkennbar ist. Dies kann beispielsweise eine unterschiedliche Farbe oder leicht abweichende Farbnuance sein.

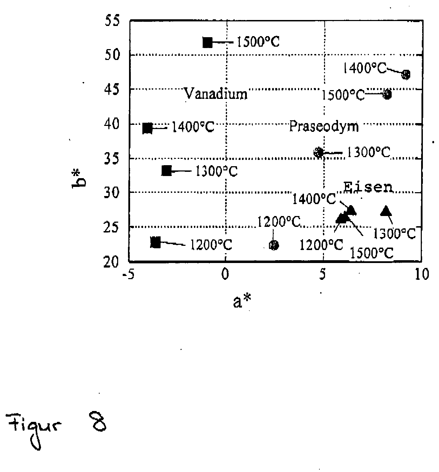

Erfindungsgemäss enthält der wenigstens eine Kern Farbpigmente, die nicht oder in anderer Menge in der Deckschicht vorhanden sind. Solche Farbpigmente werden vorzugsweise aus der Gruppe bestehend aus Eisenoxid (Fe₂O₃), Eisennitrat (Fe(NO₃)₃), Bismuthoxid (Bi₂O₃), Ceroxid (CeO₂), Yttriumoxid (Y₂O₃), Erbiumoxid (Er₂O₃), Praesodymoxid (Pr₆O₁₁), Praesodymnitrat (Pr(NO₃)₃), Zinkoxid (ZnO), Vanadiumoxysulfat (VOSO₄) und Mischungen davon ausgewählt. Für den mindestens einen Kern können ausserdem auch metallische Kupfer-Nanopartikel, allenfalls als Mischung mit einem oder mehreren der oben genannten Pigmente, eingesetzt werden. In einer besonders bevorzugten Ausführungsform enthält der wenigstens eine Kern 0.01 to 0.2 mol % und die Deckschicht 0.01 to 0.2 mol % der obigen Farbpigmente. Die Konzentration der Farbpigmente hängt nicht nur von dem Farbpigment als solches ab, sondern auch von der Sinterungstemperatur, da - wie in Figur 8 gezeigt - der Gelb/Blau- respektive der Grün/Rot-Anteil je nach Sintertemperatur variiert (der b*-Wert entspricht dem Gelb/Blau-Anteil, wobei ein tiefer Wert einem hohen Blau-Anteil und ein hoher Wert einem hohen Gelb-Anteil entspricht; der a*-Wert entspricht dem Grün/Rot-Anteil, wobei ein tiefer oder negativer Wert einem hohen Grün-Anteil und ein hoher Wert einem hohen Rot-Anteil entspricht).

Alternativ aber nicht gemäss der Erfindung ist es möglich, dass der wenigstens eine Kern von der Deckschicht akustisch zu unterscheiden ist. Unter dem Ausdruck "akustisch" wird verstanden, dass das Geräusch des Bohrers beim Beschleifen des Abutments verschieden ist, je nachdem, ob der wenigstens eine Kern oder die Deckschicht beschliffen wird, wobei der Unterschied so deutlich ist, dass er vom Zahnarzt sofort wahrnehmbar ist. Der akustisch hörbare Unterschied wird dadurch erzeugt, dass der wenigstens eine Kern eine Härte aufweist, die von der Deckschicht verschieden ist. Sobald der Bohrer auf das härtere Material trifft, ist das hörbare Geräusch höher als vorher.

Als Material für die Deckschicht wird vorzugsweise Aluminiumoxid (Al₂O₃) verwendet. Aluminiumoxid ist eine durchsichtige Keramik und eignet sich aus daher aus ästhetischen Gründen für die Deckschicht. Als Material für den mindestens einen Kern wird vorzugsweise teilstabilisiertes, polykristallines tetragonales Zirkonoxid (Tetragonal zirconia polycrystal, TZP), insbesondere Yttrium stabilisiertes TZP (Y-TZP) verwendet. Dieses Material zeichnet sich durch ein optimales Verhalten bezüglich Härte und Bruchstabilität aus, was für den Kern natürlich besonders wichtig ist.

In einer besonders bevorzugten Ausführungsform unterscheiden sich der wenigsten eine Kern und die Deckschicht sowohl visuell als auch akustisch voneinander, d.h. der Zahnarzt hat sogar ein doppeltes Warnsystem. Dies wird durch Zugabe von Farbpigmenten und Verstärkung des Kernmaterials erreicht.

Durch das Beschleifen des Abutments kann entweder ein gerades oder ein abgewinkeltes Abutment hergestellt werden. Für ein gerades Abutment wird vorzugsweise ein erfindungsgemässes Abutment mit genau einem Kern und einer Deckschicht verwendet. Wahlweise kann zwischen dem genau einen Kern und der Deckschicht eine Zwischenschicht liegen.

In einer weiteren bevorzugten Ausführungsform enthält das erfindungsgemässe Abutment drei oder mehr Kerne und eine Deckschicht, die visuell voneinander unterscheidbar sind. Das heisst, dass die wenigstens drei Kerne alle unterschiedliche Farben oder Farbnuancen aufweisen und sich zusätzlich von der Deckschicht unterscheiden. Mit einem solchen Abutment werden vorzugsweise abgewinkelte Abutments hergestellt. Das Abutment gemäss dieser bevorzugten Ausführungsform ermöglicht nun eine maximale Eindrehgenauigkeit, da der entsprechende Aufbauteil nach dem Eindrehen vom Zahnarzt in situ im Mund geschliffen wird. Der Zahnarzt erhält durch die drei vorgegebenen Kerne klare Vorgaben, wie weit er schleifen darf. Diese drei oder mehr Kerne sind vorzugsweise mit einem Neigungswinkel von 5° bis 25° von der Mittelachse weggerichtet angeordnet. In einer bevorzugten Ausführungsform beträgt der Neigungswinkel 15°. Zwischen den Kernen kann mittig wahlweise eine Öffnung mit oder ohne Gewinde angeordnet sein, um eine Kronen-, Brücken- oder Prothesenkonstruktion darauf zu befestigen.

Das erfindungsgemässe Abutment wird vorzugsweise aus einer biokompatiblen Keramik hergestellt. Vorzugsweise handelt es sich bei der biokompatiblen Keramik um eine stabilisierte Zirkonoxidkeramik, besonders bevorzugt um 92.1 bis 93.5 Gew.% ZrO₂ und 4.5 bis 5.5 Gew.% Y₂O₃ und 1.8 bis 2.2 Gew.% HfO₂. Eine derartig stabilisierte Zirkonoxidkeramik weist insbesondere bei Herstellung durch heissisostatisches Pressen oder durch Sintern mit anschliessender heissisostatischer Nachverdichtung eine ausserordentlich hohe mechanische Stabilität und Festigkeit auf. Die Deckschicht kann dabei auf den wenigstens einen Kern, der sich visuell und/oder akustisch von der Deckschicht unterscheidet, gespritzt und der so erhaltene Rohling gesintert werden.

In einer weiteren Ausführungsform ist zwischen dem wenigstens einen Kern und der Deckschicht eine Zwischenschicht angebracht, welche die Funktion einer Übergangsschicht hat. D.h. entweder weist sie eine von der Deckschicht und dem wenigstens einen Kern unterschiedliche Farbe auf oder sie hat eine Härte, die zwischen der Härte der Deckschicht und der Härte des wenigstens einen Kerns liegt.

Das zweiteilige Implantat, auf welches das erfindungsgemässe Abutment aufgebracht wird, kann aus Metall oder einer Metalllegierung sein, oder aber aus einer Keramik. Im Falle eines Metalls ist das Implantat vorzugsweise aus Titan oder einer Titanlegierung. Das zweiteilige Implantat ist durch eine geeignete abtragende Vorbehandlung oder durch eine geeignete Beschichtung an seiner Aussenoberfläche behandelt, um so eine gute Verbundosteogenese nach der Implantation zu erreichen. Der Verankerungsteil kann beispielsweise an seiner Oberfläche silanisiert oder hydroxyliert sein. Besonders bevorzugt ist er durch ein Abtragungsverfahren aufgeraut und mit Flusssäure geätzt. Damit weist das Implantat eine in der EP 07 007 950.4 beschriebene Oberflächenstruktur auf, auf die Bezug genommen wird.

Weitere Merkmale und Vorteile ergeben sich aus der folgenden Beschreibung bevorzugter Ausführungsbeispiele unter Bezugnahme auf die Zeichnungen. Es zeigen:
- Fig. 1: Aufsicht auf eine erste Ausführungsform des erfindungsgemässen Abutments;
- Fig. 2: Schnitt durch das in Fig. 1 gezeigte erfindungsgemässe Abutment;
- Fig. 3: Erste Ausführungsform des erfindungsgemässen Abutments mit aufgesetzter Prothetik;
- Fig. 4: Zweite Ausführungsform des erfindungsgemässen Abutments;
- Fig. 5: Schnitt durch das in Fig. 4 gezeigte erfindungsgemässe Abutment;
- Fig. 6: Zweite Ausführungsform des erfindungsgemässen Abutments nach dem Beschleifen;
- Fig. 7: Zweite Ausführungsform des erfindungsgemässen Abutments mit aufgesetzter Prothetik;
- Fig. 8: Abhängigkeit der Farbpigmente von der

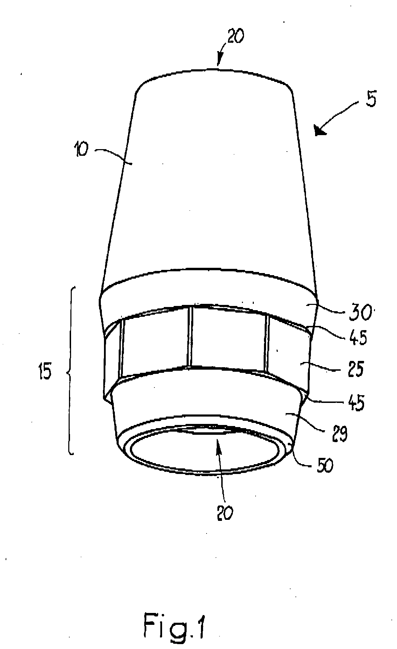

Figur 1 zeigt eine Aufsicht auf eine erste Ausführungsform des erfindungsgemässen Abutments 5. Das Abutment 5 weist oben eine Halspartie 10 und eine sich nach unten anschliessende Konuspartie 15 auf. Durch das Abutment 5 erstreckt sich ein Einlass 20, hier in Form eines axialen Durchgangs. Die Halspartie 10 kann eine vertikal verlaufende Planfläche aufweisen, die der Rotationssicherung des später auf das Abutment 5 aufzubringenden Prothetikelements dient. Zugleich ist die Planfläche zum Ansetzen eines Einschraubwerkzeugs benutzbar. Es ist eine vorteilhafte Variante, drei jeweils um 120° versetzte Planflächen anzuordnen.

Die Konuspartie 15 weist eine Gegenkontur 25 auf, die zur im Implantat befindlichen Aufnahmekontur komplementär ist, sodass das Abutment 5 rotationsgesichert in das Implantat eingesetzt werden kann. Analog zu dem als Aufnahmekontur ausgebildeten, vertieften Vielkant ist die Gegenkontur 25 in diesem Beispiel als Vielkant gestaltet. Die Gegenkontur 25 ist derart auf der Konuspartie 15 angeordnet, dass auch hier unterbrechungslose Segmente 29, 30 der Konuspartie 15 erhalten bleiben. Die Mantelflächen beider Segmente 29, 30 fluchten zueinander, wie auch die Abschnitte des Innenkonus im Implantatkopf des zweiteiligen Implantats zueinander fluchten. In den Übergängen vom Segment 29 zur Gegenkontur 25 und von letzter zum Segment 30 entstehen Absätze 45. Zuunterst endet das Abutment 5 und dessen Segment mit dem Auslauf 50. Es ist auch möglich, die Gegenkontur 25 unmittelbar an den Auslauf angrenzend anzuordnen.

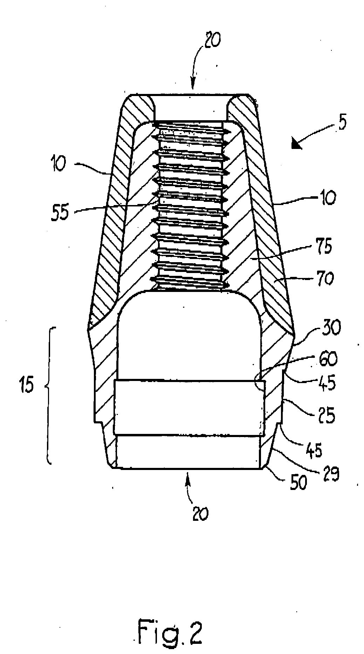

Fig. 2 zeigt einen Schnitt durch das in Fig. 1 dargestellte Abutment 5. Innerhalb des Einlasses 20 kann ein oben beginnender Innengewindeabschnitt 55 vorgesehen sein, und vor der unteren Mündung des Einlasses 20 gibt es eine radial umlaufende Nut 60. Der eventuelle Innengewindeabschnitt 55 würde der Aufnahme einer Okklusalschraube dienen, mit der die Suprakonstruktion befestigt werden könnte. Der Gewindestift der Okklusalschraube erstreckt sich nur partiell in den Einlass 20 hinein. Zwischen Innengewindeabschnitt 55 und der Nut 60 verbleibt ein gewindeloser Schraubenkopfabschnitt 65. In dieser Ausführungsform weist das erfindungsgemässe Abutment 5 einen Kern 75 und eine Deckschicht 70 auf, die visuell und/oder akustisch voneinander verschieden sind. Dadurch hat der Zahnarzt die Möglichkeit, das Abutment 5 zu beschleifen, ohne Sorge haben zu müssen, dass die Stabilität des Implantates nach dem Beschleifen des Abutments 5 nicht mehr gewährleistet ist, da er durch die Farbänderung oder die akustisch wahrnehmbare Änderung des Bohrgeräusches darauf hingewiesen wird, wann er nicht mehr weiter schleifen darf.

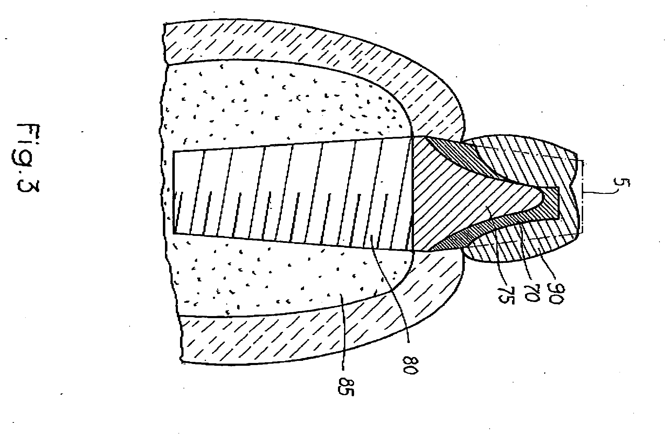

Fig. 3 zeigt einen Schnitt der ersten Ausführungsform des erfindungsgemässen Abutments 5, das auf einem im Kiefer implantierten zweiteiligen Implantat 80 befestigt wurde. Das zweiteilige Implantat 80 ist im Knochengewebe 85 implantiert. Die ursprüngliche Form des Abutments 5 ist durch eine Linie noch angedeutet. Das beschliffene Abutment 5 entspricht den individuellen Bedürfnissen des Patienten und gewährleistet eine optimale Stabilität des Implantates. Der Kern 75, der sich visuell oder akustisch von der Deckschicht 70 unterscheidet, wurde nicht beschliffen. Das beschliffene Abutment 5 wurde mit einer Krone 90 versorgt.

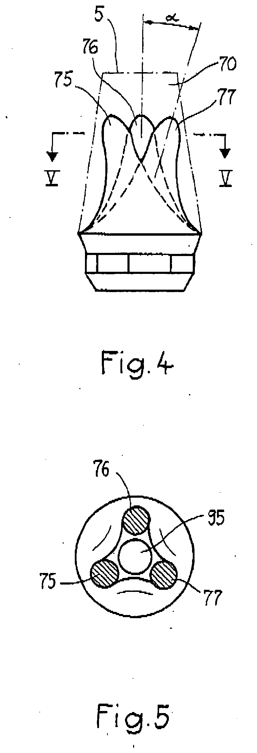

Fig. 4 zeigt eine zweite Ausführungsform des erfindungsgemässen Abutments 5. Das Abutment 5 weist drei Kerne 75, 76, 77 und eine Deckschicht 70 auf, wobei optional zwischen den Kernen 75, 76, 77 und der Deckschicht 70 noch eine Zwischenschicht angeordnet sein kann. Die drei Kerne 75, 76, 77 des Abutments sind bezüglich der Mittelachse drehachsensymmetrisch und mit einem Neigungswinkel α von 5 bis 25° angeordnet. Besonders bevorzugt ist dabei ein Neigungswinkel α von 15°. Zwischen den Kernen 75, 76, 77 kann eine Öffnung 95 angeordnet sein, die zur Befestigung eines Prothetikelements dient.

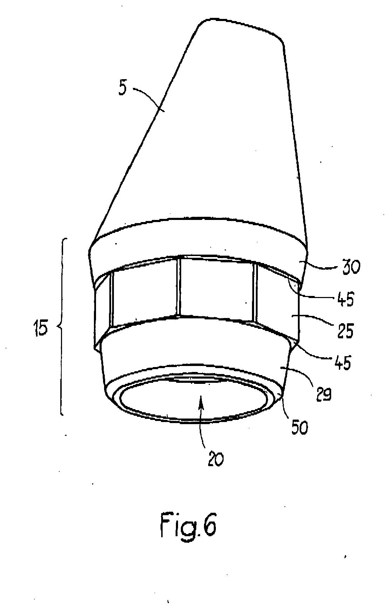

Fig. 5 zeigt einen Schnitt durch das in Fig. 4 gezeigte Abutment 5, um die drei Kerne 75, 76, 77 besser zu verdeutlichen. Die drei Kerne 75, 76, 77 ermöglichen es einem Zahnarzt bei einer schwierigen Kieferlage, wie beispielsweise bei einem bezüglich der Schneidefläche der Zähne abgewinkelten Kieferknochen, ein abgewinkeltes Abutment zu schleifen. Dies, ohne dass der sonst bei vorgefertigten abgewinkelten Abutments notwendige 360° Winkel eingehalten werden muss, um das Abutment in die richtige Position zu bringen. Ein solches Abutment 5 nach dem entsprechenden Beschleifen ist in Figur 6 gezeigt. In der Mitte zwischen den Kernen 75, 76, 77 kann eine Öffnung 95 angeordnet sein, die der Befestigung der Prothetikelemente dient.

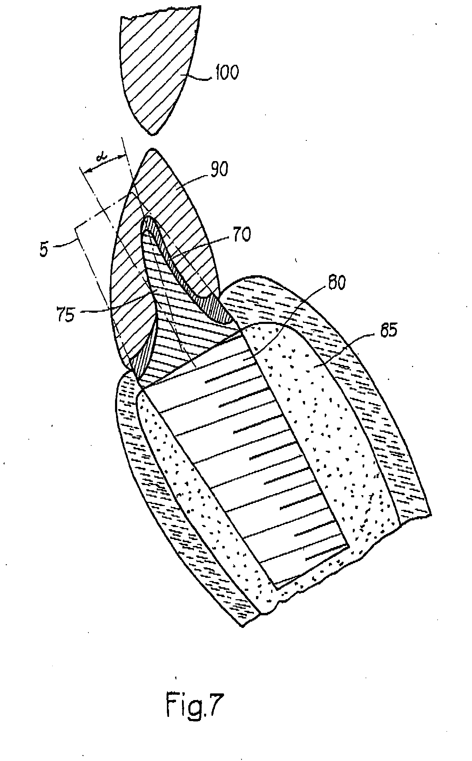

Fig. 7 zeigt einen Schnitt der zweiten Ausführungsform des erfindungsgemässen Abutments 5, das auf einem im Kiefer implantierten zweiteiligen Implantat 80 befestigt wurde. Das zweiteilige Implantat 80 ist im Knochengewebe 85 implantiert. Die ursprüngliche Form des Abutments 5 ist durch eine Linie noch angedeutet. Das beschliffene abgewinkelte Abutment 5 entspricht den individuellen Bedürfnissen des Patienten und gewährleistet eine optimale Stabilität des Implantates. Der Kern 75, der sich visuell oder akustisch von der Deckschicht 70 unterscheidet, wurde nicht beschliffen. Das beschliffene Abutment 5 wurde mit einer Krone 90 versorgt. Durch das erfindungsgemässe Abutment 5 ist es möglich, die Krone 90 trotz abgewinkeltem Kieferknochen unter Einhaltung der Stabilität genau auf den Gegenzahn 100 auszurichten, was für einen optimalen Biss eine Notwendigkeit ist.

## Patentansprüche

1. Keramik-Abutment (5) für ein zweiteiliges Dentalimplantat zur Aufnahme eines zu applizierenden Elementes, wobei das Abutment (5) wenigstens einen Kern (75) und eine Deckschicht (70) aufweist, wobei die Deckschicht (70) eine bezüglich der Stabilität des Implantates optionale Schicht darstellt, die bei Verwendung gegebenenfalls vollständig abgeschliffen sein kann, und wobei der Kern (75) und die Deckschicht (70) visuell voneinander verschieden sind, **dadurch gekennzeichnet, dass** der wenigstens eine Kern Farbpigmente enthält, die nicht oder in anderer Menge in der Deckschichte (70)vorhanden sind.

2. Keramik-Abutment (5) gemäss Anspruch 1, **dadurch gekennzeichnet, dass** zwischen dem wenigstens einen Kern (75) und der Deckschicht (70) eine Zwischenschicht angeordnet ist, die visuell von dem wenigstens einen Kern und der Deckschicht verschieden ist.

3. Keramik-Abutment (5) gemäss einem der Ansprüche 1 oder 2, **dadurch gekennzeichnet, dass** das Abutment (5) genau einen Kern (75) und eine Deckschicht (70) aufweist.

4. Keramik-Abutment (5) gemäss einem der Ansprüche 1 oder 2, **dadurch gekennzeichnet, dass** das Abutment (5) mehrere Kerne (75, 76, 77) und eine Deckschicht (70) aufweist.

5. Keramik-Abutment (5) gemäss Anspruch 4, **dadurch gekennzeichnet, dass** das Abutment (5) drei Kerne (75, 76, 77) und eine Deckschicht (70) aufweist.

6. Keramik-Abutment (5) gemäss Anspruch 5, **dadurch gekennzeichnet, dass** die drei Kerne (75, 76, 77) drehachsensymmetrisch zueinander angeordnet sind.

7. Keramik-Abutment (5) gemäss Anspruch 6, **dadurch gekennzeichnet, dass** die drei Kerne (75, 76, 77) mit einem Neigungswinkel von 5 bis 25° von der Mittelachse weggerichtet angeordnet sind.

8. Keramik-Abutment (5) gemäss Anspruch 7, **dadurch gekennzeichnet, dass** der Neigungswinkel 15° beträgt.

9. Keramik-Abutment (5) gemäss einem der Ansprüche 4 bis 8, **dadurch gekennzeichnet, dass** sich die Kerne (75, 76, 77) visuell voneinander unterscheiden.

10. Keramik-Abutment (5) gemäss einem der vorangehenden Ansprüche, **dadurch gekennzeichnet, dass** der wenigstens eine Kern (75) einen Farbstoff ausgewählt aus der Gruppe bestehend aus Eisenoxid, Eisennitrat, Bismuthoxid, Ceroxid, Yttriumoxid, Erbiumoxid, Praesodymoxid, Praesodymnitrat, Zinkoxid, Vanadiumoxysulfat, metallischen Kupfer-Nanopartikeln und Mischungen davon enthält.

11. Keramik-Abutment (5) gemäss einem der vorangehenden Ansprüche, **dadurch gekennzeichnet, dass** die Deckschicht (70) einen Farbstoff ausgewählt aus der Gruppe bestehend aus Eisenoxid, Eisennitrat, Bismuthoxid, Ceroxid, Yttriumoxid, Erbiumoxid, Praesodymoxid, Praesodymnitrat, Zinkoxid, Vanadiumoxysulfat und Mischungen davon enthält.

12. Keramik-Abutment (5) gemäss einem der vorangehenden Ansprüche, **dadurch gekennzeichnet, dass** für den wenigstens einen Kern (75) Yttrium stabilisiertes polykristallines tetragonales Zirkonoxid verwendet wird.

13. Keramik-Abutment (5) gemäss einem der vorangehenden Ansprüche, **dadurch gekennzeichnet, dass** für die Deckschicht (70) Aluminiumoxid verwendet wird.

14. Verfahren zur Herstellung eines Keramik-Abutments (5) gemäss einem der vorangehenden Ansprüche, **dadurch gekennzeichnet, dass** ein Rohling des Abutments (5) mit dem wenigstens einen Kern gespritzt wird, wobei der wenigstens eine Kern (75) ein Farbpigment enthält und auf den wenigstens einen Kern (75) eine Deckschicht (70) gespritzt und anschliessend gesintert wird.

## Claims

1. Ceramic abutment (5) for a two-part dental implant for receiving an element to be applied, wherein the abutment (5) has at least one core (75) and a cover layer (70), wherein the cover layer (70) represents an optional layer with respect to the stability of the implant, which can optionally be completely ground off during use, and wherein the core (75) and the cover layer (70) are visually different from one another, **characterized in that** the at least one core contains color pigments, which are not or which are present in other quantities in the cover layer (70).

2. Ceramic abutment (5) according to claim 1, **characterized in that** an intermediate layer is arranged between the at least one core (75) and the cover layer (70), which intermediate layer is visually different from the at least one core and the cover layer.

3. Ceramic abutment (5) according to one of claims 1 or 2, **characterized in that** the abutment (5) comprises exactly one core (75) and one cover layer (70).

4. Ceramic abutment (5) according to one of claims 1 or 2, **characterized in that** the abutment (5) comprises a plurality of cores (75, 76, 77) and a cover layer (70).

5. Ceramic abutment (5) according to claim 4, **characterized in that** the abutment (5) has three cores (75, 76, 77) and a cover layer (70).

6. Ceramic abutment (5) according to claim 5, **characterized in that** the three cores (75, 76, 77) are arranged symmetrically with respect to each other in the rotational axis.

7. Ceramic abutment (5) according to claim 6, **characterized in that** the three cores (75, 76, 77) are arranged with an angle of inclination of 5 to 25° away from the central axis.

8. Ceramic abutment (5) according to claim 7, **characterized in that** the angle of inclination is 15°.

9. Ceramic abutment (5) according to one of claims 4 to 8, **characterized in that** the cores (75, 76, 77) differ visually from each other.

10. Ceramic abutment (5) according to one of the preceding claims, **characterized in that** said at least one core (75) contains a dye selected from the group consisting of iron oxide, iron nitrate, bismuth oxide, cerium oxide, yttrium oxide, erbium oxide, praesodymium oxide, praesodymnitrate, zinc oxide, vanadium oxysulfate, metallic copper nanoparticles and mixtures thereof.

11. Ceramic abutment (5) according to any of the preceding claims, **characterized in that** the cover layer (70) contains a dye selected from the group consisting of iron oxide, iron nitrate, bismuth oxide, cerium oxide, yttrium oxide, erbium oxide, praesodymium oxide, praesodymnitrate, zinc oxide, vanadium oxysulfate and mixtures thereof.

12. Ceramic abutment (5) according to one of the preceding claims, **characterized in that** for the at least one core (75) yttrium stabilized polycrystalline tetragonal zirconia is used.

13. Ceramic abutment (5) according to one of the preceding claims, **characterized in that** aluminium oxide is used for the cover layer (70).

14. Method for producing a ceramic abutment (5) according to one of the preceding claims, **characterized in that** a blank of the abutment (5) is sprayed with the at least one core, wherein the at least one core (75) contains a color pigment and a cover layer (70) is sprayed onto the at least one core (75) and then sintered.

## Revendications

1. Pilier en céramique (5) pour un implant dentaire en deux parties pour la réception d'un élément à appliquer, le pilier (5) ayant au moins un noyau (75) et une couche de couverture (70), la couche de couverture (70) représentant une couche optionnelle par rapport à la stabilité de l'implant, qui peut être optionnellement complètement poncée lors de l'utilisation, et le noyau (75) et la couche de couverture (70) étant visuellement différents l'un de l'autre, **caractérisé en ce que** le au moins un noyau contient des pigments de couleur, qui ne sont pas présents ou qui sont présents en d'autres quantités dans la couche de couverture (70).

2. Pilier en céramique (5) selon la revendication 1, **caractérisé en ce qu'**une couche intermédiaire est disposée entre le au moins un noyau (75) et la couche de couverture (70), laquelle couche intermédiaire est visuellement différente du au moins un noyau et de la couche de couverture.

3. Pilier en céramique (5) selon l'une des revendications 1 ou 2, **caractérisé en ce que** le pilier (5) comprend exactement un noyau (75) et une couche de couverture (70).

4. Pilier en céramique (5) selon l'une des revendications 1 ou 2, **caractérisé en ce que** le pilier (5) comprend plusieurs noyaux (75, 76, 77) et une couche de couverture (70).

5. Pilier en céramique (5) selon la revendication 4, **caractérisé en ce que** le pilier (5) présente trois noyaux (75, 76, 77) et une couche de couverture (70) .

6. Pilier en céramique (5) selon la revendication 5, **caractérisé en ce que** les trois noyaux (75, 76, 77) sont disposés symétriquement l'un par rapport à l'autre par rapport à l'axe de rotation.

7. Pilier en céramique (5) selon la revendication 6, **caractérisé en ce que** les trois noyaux (75, 76, 77) sont disposés avec un angle d'inclinaison de 5 à 25° en s'éloignant de l'axe central.

8. Pilier en céramique (5) selon la revendication 7, **caractérisé en ce que** l'angle d'inclinaison est de 15°.

9. Pilier en céramique (5) selon l'une des revendications 4 à 8, **caractérisé en ce que** les noyaux (75, 76, 77) diffèrent visuellement l'un de l'autre.

10. Pilier en céramique (5) selon l'une des revendications précédentes, **caractérisé en ce que** le au moins un noyau (75) contient un colorant sélectionné dans le groupe consistant en oxyde de fer, nitrate de fer, oxyde de bismuth, oxyde de cérium, oxyde d'yttrium, oxyde d'erbium, oxyde de praséodyme, nitrate de praséodyme, oxyde de zinc, oxysulfate de vanadium, nanoparticules de cuivre métallique et des mélanges de ceux-ci.

11. Pilier en céramique (5) selon l'une quelconques des revendications précédentes, **caractérisé en ce que** la couche de couverture (70) contient un colorant sélectionné dans le groupe consistant en oxyde de fer, nitrate de fer, oxyde de bismuth, oxyde de cérium, oxyde d'yttrium, oxyde d'erbium, oxyde de praséodyme, nitrate de praséodyme, oxyde de zinc, oxysulfate de vanadium, et des mélanges de ceux-ci.

12. Pilier en céramique (5) selon l'une des revendications précédentes, **caractérisé en ce que** pour le au moins un noyau (75) de l'oxyde de zirconium tétragonal polycristallin stabilisé à l'yttrium est utilisé.

13. Pilier en céramique (5) selon l'une des revendications précédentes, **caractérisé en ce que** de l'oxyde d'aluminium est utilisé pour la couche de couverture (70).

14. Méthode pour la fabrication un pilier en céramique (5) selon l'une des revendications précédentes, **caractérisé en ce qu'**une forme du pilier (5) avec le au moins un noyau est pulvérisée, le au moins un noyau (75) contenant un pigment de couleur et une couche de couverture (70) étant pulvérisée sur le au moins un noyau (75) et ensuite frittée.
